# EUROPÄISCHE PATENTSCHRIFT

(11) **EP 1 669 234 B1**
(45) Veröffentlichungstag und Bekanntmachung des Hinweises auf die Patenterteilung: **16.07.2008**
(21) Anmeldenummer: 05024375.7
(22) Anmeldetag: 09.11.2005
(51) Int. Cl.: B60J 7/16, B60P 3/22, B63B 19/18, F41H 5/22

(54) **Vorrichtung zum Öffnen und Schliessen eines Lukendeckels, insbesondere für ein gepanzertes Fahrzeug**
Apparatus for opening and closing a hatch cover, in particular for an armoured vehicle
Dispositif pour ouvrir et fermer un couvercle d'écoutille, en particulier pour un véhicule blindé

(30) Priorität: 08.12.2004 DE 102004059016
(43) Veröffentlichungstag der Anmeldung: 14.06.2006
(73) Patentinhaber: Rheinmetall Landsysteme GmbH, 24107 Kiel (DE)
(72) Erfinder: Röstel, Burkhard, 24232 Schönkirchen (DE); Striepke, Olaf, 25548 Kellinghusen (DE)
(74) Vertreter: Dietrich, Barbara

(56) Entgegenhaltungen:
- EP-A- 1 621 844
- DE-A1- 3 305 882
- DE-A1- 3 438 360
- US-A- 3 069 731
- US-A- 4 650 243
- US-A- 4 667 565
- US-B1- 6 196 590

## Beschreibung

Die Erfindung betrifft eine Vorrichtung zum Öffnen und Schließen eines Lukendeckels einer Einstiegsöffnung oder dergleichen insbesondere im Dachbereich eines gepanzertes Fahrzeugs.

Eine Luke für ein gepanzertes Kampffahrzeug wird in der DE 197 08 848 A1 offenbart. Diese ist um zwei Schwenkachsen schwenkbar. Näher beschrieben wird die Problematik der Verriegelung der Luke.

Bei Fahrzeugen mit massivem Dachschutz kommen in der Praxis Schiebeluken zum Einsatz. Dabei wird der Lukendeckel über dem Fahrzeugdach horizontal verschoben. Eine derartige Ausführung zeigt die DE 203 16 836 U1. Zur Herstellung der Dichtfunktion wird die Dichtung von unten gegen den Lukendeckel gepresst.

Eine weitere Schiebeluke beschreibt die DE 200 07 620 U1. Dabei wird die Notwendigkeit einer automatischen Brems- und Arretiervorrichtung aus Sicherheitsgründen näher betrachtet.

Die DE 42 40 140 A1 enthält nähere Einzelheiten einer Vorrichtung zum Öffnen und Schließen eines Lukendeckels an einem Kampfpanzer. Der Lukendeckel ist dabei aus zwei übereinander angeordneten Deckelteilen aufgebaut. Ein Deckelteil ist ein oberer Schiebedeckel, der oberhalb des oberen Randes der Lukenöffnung angeordnet und parallel zur Schließeben der Luke verschiebbar ist. Das andere Deckelteil , der untere Dichtdeckel ist senkrecht zur Schließebene bewegbar angeordnet. Die Aufgabe besteht dabei darin, das Verschieben des Schiebedeckels in die Offenstellung und in die Schließstellung mittels einem einfachen, im Inneren des Fahrzeuges angeordneten Kurbeltriebes über eine mit dem Schiebedeckel verbundenen Zahnstange zu erreichen. Der Deckel selbst führt eine von der Längsbewegung getrennte Hubbewegung in vertikaler Richtung aus, d.h. vor Beginn der Bewegung des Schiebedeckels findet ein Leerhub statt, bevor die Koppelung mit dem Schiebedeckel wirksam wird. Damit soll erreicht werden, die notwendigen Bewegungsabläufe beim Öffnen und Schließen, nämlich das Entriegeln und das Anheben des Dichtdeckels, das Entriegeln und Verschieben sowie Verriegeln des Schiebedeckels in der Offenstellung und ebenso der umgekehrte Ablauf beim Schließen des Lukendeckels, mit einem Minimum an Handgriffen durchführen zu können.

Nachteilig bei diesen bekannten Schiebeluken ist, dass sich der Lukendeckel entweder vollständig oberhalb der Dachplatte befindet oder der Bereich, der beim Öffnen der Luke überstrichen wird, um den Betrag der Dachplattendicke abgesenkt werden muss. Zudem ist die Dichtung häufig von Innen gegen den Lukendeckel zu pressen. Insbesondere ein Notöffnen von Außen wird durch die angepresste Dichtung behindert.

Die DE 33 05 882 A1 (welche die Grundlage für den unabhängigen Anspruch 1 bildet) beschreibt einen Mannlochdeckel für die Ein- und Ausstiegluke von Kampffahrzeugen. Der Lukendeckel ist dabei aus mindestens zwei in der Schließstellung übereinander angeordneten Deckenteilen unterschiedlicher Masse aufgebaut. Zum Schließen wird das obere Deckenteil über die Lukenöffnung geschoben und dann das untere Deckenteil abgesenkt bis die Luke dichtend verschlossen ist. In einer anderen Variante wird das untere Deckenteil angehoben, bis der obere Rand des zylindrischen Rings dichtend an der Unterseite des oberen Deckenteils anliegt.

Die DE 34 38 360 A1 offenbart ein Fahrzeugdach mit einer durch einen Deckel verschließbaren Dachöffnung. Der Deckel ist mit einer Verstellvorrichtung versehen. Der Deckel lässt sich dabei unter anderem zwischen einer Stellung, in der er die Dachöffnung bündig mit der Dachhaut verschließt und einer Stellung verlagern, in der die Deckelhinterkante unter den unteren hinteren Rand der Dachöffnung der Dachhaut abgesenkt ist.

Die Erfindung stellt sich die Aufgabe, eine einfache Vorrichtung zum Verstellen eines Lukendeckels aufzuzeigen, welche die aufgezeigten Nachteile nicht mehr aufweist.

Gelöst wird die Aufgabe durch die Merkmale des Patentanspruchs 1.

Vorteilhafte Ausführungen sind in den Unteransprüchen ausgewiesen.

Der Erfindung liegt die Idee zugrunde, den Lukendeckel so zu verschieben, dass er eine zweidimensionale Bewegung beschreibt. Neben der Translationsbewegung vollzieht der Lukendeckel kurz vor Erreichen einer geschlossenen Stellung eine Schwenkbewegung und drückt sich hierbei auf eine Dichtung, welche die Luke bzw. den Lukendeckel abdichtet und Bestandteil des Fahrzeugs sein kann.

Das aufgefundene Lösungsprinzip beruht auf dem Zusammenwirken mehrerer Hebelprinzipien, einmal dem Kniehebelprinzip als Verschlussfunktion und zur Erzeugung der Dichtkraft und einmal dem Hebelprinzip zum Umlenken einer Druckfederkraft. Diese dient einerseits zum Anheben des Lukendeckels und Halten in offener Stellung und andererseits zur Erzeugung einer Sicherungskraft, um den Lukendeckel in geschlossener Stellung zu sichern.

Die Dichtbewegung wird in vorteilhafter Weise mit der Schließbewegung der Luke erzeugt, so dass kein separates Anpressen der Dichtung notwendig ist. Die Luke beziehungsweise der Lukendeckel kann von außen geöffnet und dichtend verschlossen werden und eignet sich somit als Ein- und Ausstieg bei Inbetriebnahme und Abstellen des Fahrzeuges. Weiterhin besteht ein durchgehender Dachschutz ohne Stufen. Der Lukendeckel wird angehoben, wobei die gesamte Schiebeluke über Schutz verfahren werden kann.

Vorgesehen ist, dass der Lukendeckel mittels Hebel einer Parallelogrammanordnung verschwenkt wird. Der Lukendeckel wird dabei auf einer Kreisbahn relativ zu einem Führungsschlitten und geführt von der Parallelführung geführt. Die Schwenkachse der Hebel ist parallel zur Lukenebene. Dadurch ist die Hubbewegung mit der Auffahr- bzw. Abfahrbewegung gekoppelt. Die Hubbewegung des Lukendeckels benötigt keine separaten Antriebselemente wie Federhubwerk oder Hubstange.

Vorzugsweise weist die Vorrichtung eine Führung mit einem Führungsschlitten auf, der den Lukendeckel über Parallelführungen trägt. Über Druckfedern und Umlenkhebel erfolgt das Verschwenken des Lukendeckels, wozu ein Antrieb an eine mit dem Führungsschlitten funktional verbundene Zahnstange angreift. Der Antrieb kann ein Motor oder ein Getriebe sein und über ein Betätigungselement, wie einen Schalter oder eine Kurbel, angetrieben werden.

Der Einsatz einer derartigen Schiebeluke ist nicht auf gepanzerte Fahrzeuge beschränkt. Denkbar ist auch ein Einsatz bei zivilen Fahrzeugen, wie bei Wohnmobilen, Wohnwagen, Schienenfahrzeugen, Luftfahrzeugen (auch militärisch) etc. sowie bei Wasserfahrzeugen.

Anhand eines Ausführungsbeispiels mit Zeichnung soll die Erfindung näher erläutert werden.

Es zeigt:
- Fig. 1: in einer skizzenhaften Darstellung ein Fahrzeug mit einem Lukendeckel;
- Fig. 2: in einer Draufsichtdarstellung die wesentlichen Einzelkomponenten der Vorrichtung mit Mitteln zur Parallelführung des Lukendeckels,
- Fig. 3 a - c: in einer Ablaufdarstellung die Verstellung des Lukendeckels von einer geschlossener in eine offene Stellung.

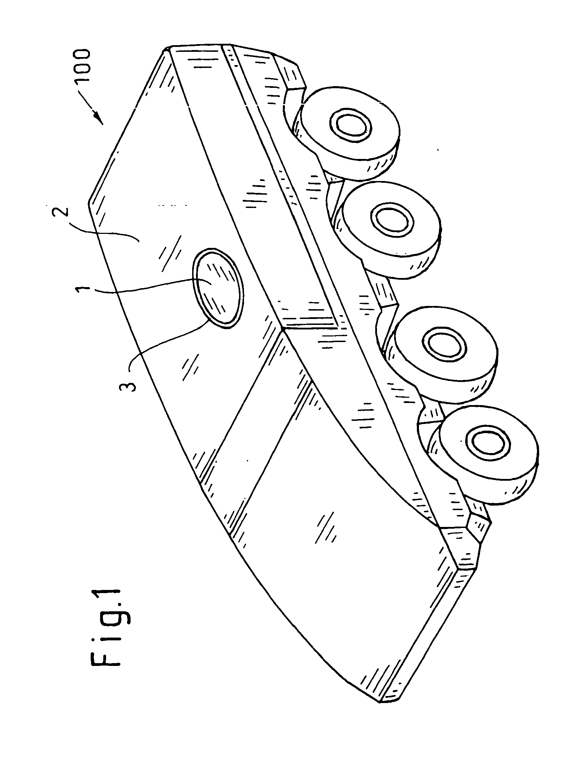

In Fig. 1 ist ein Fahrzeug 100 mit einem Lukendeckel 1, beispielsweise im Fahrzeugdach 2, skizzenhaft dargestellt. Der Lukendeckel 1 dient hier zum Öffnen bzw. Verschließen einer Öffnung 3 im Fahrzeugdach 1

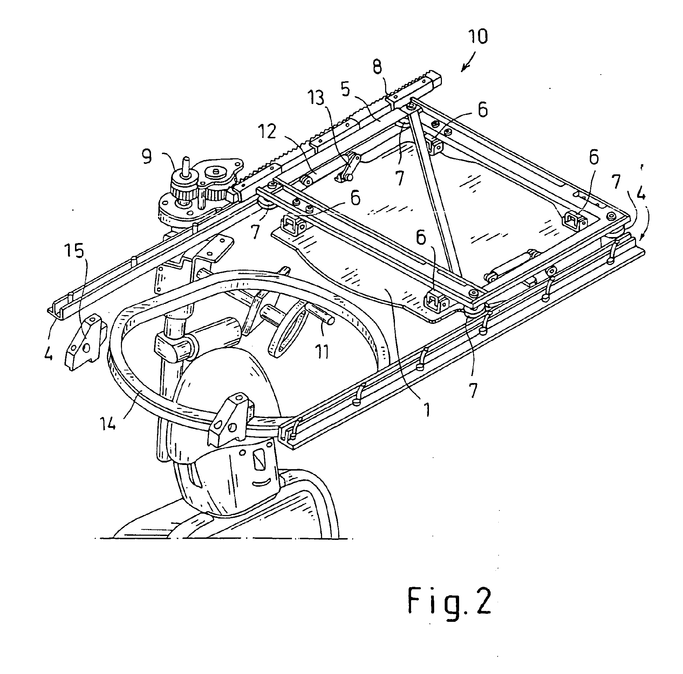

Fig. 2 zeigt wesentliche Einzelkomponente der Vorrichtung 10 zum Verstellen des Lukendeckels 1, der mit einem auf einer Führung 4 geführten Führungsschlitten 5 der Vorrichtung 10 funktional derart verbunden ist, dass der Lukendeckel 1 bewegt werden kann. Für einen gleichmäßigen Halt und eine gleichmäßige Führung sind vier Parallelführungen 6 vorgesehen, die einerseits mit dem Lukendeckel 1 und andererseits mit dem Führungsschlitten 5 verbunden sind. Eine leichte Verstellbarkeit des Lukendeckels 1 wird dadurch erreicht, dass weiterhin vier Führungsrollen 7 eingebunden sind, durch die der Führungsschlitten 5 innerhalb der Führung 4 geführt werden kann. Die Führung 4 besteht in der einfachsten Form aus beispielsweise zwei L- Schienen, die mit dem Fahrzeugdach 2 eine konstruktive Einheit bilden können.
Der Führungsschlitten 5 ist zumindest einseitig durch eine Zahnstange 8 und einen daran angreifenden vorzugsweise fahrzeugseitig angebrachten Antrieb 9 bewegbar. Der Antrieb 9 weist eine Kurbel 11 für das Verstellen des Lukendeckels 1 und damit des Führungsschlittens 5 auf.
Weitere wichtige Komponenten der Vorrichtung 10 sind Druckfedern 12, die mit Umlenkhebeln 13 in funktionalem Zusammenhang stehen. Die Druckfedern 12 sind dabei mit dem Führungsschlitten 5 einerseits und die Umlenkhebel 13 mit dem Lukendeckel 1 andererseits verbunden.
Eine Lukendichtung 14 ist Bestandteil des Fahrzeuges 100. Mit 15 sind Anschläge für das Führen des Lukendeckels 1 gekennzeichnet.

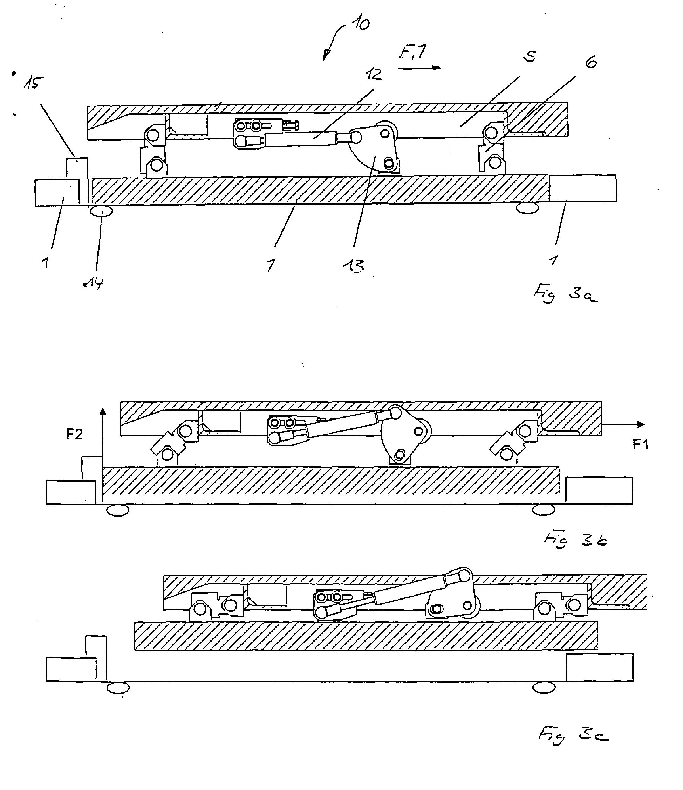

Fig. 3a bis c geben die Funktions- bzw. Arbeitsweise der Schiebeluke 10 wieder.

In der geschlossenen Stellung (Fig. 3a) wird der Lukendeckel 1 durch die Parallelführungen 6 niedergehalten und auf die Dichtung 114 gepresst. Diese Stellung ist durch das Kniehebelprinzip (Parallelführung 6 und Umlenkhebel 13) arretiert. Beim Öffnen, durch Betätigung der Kurbel 11 und der Übertragung der Bewegung auf den Antrieb 9 und damit auf die Zahnstange 8 , bewegt sich zunächst nur der Führungsschlitten 5 entlang dem Weg F1 während der Lukendeckel 1 auf der Dichtung 14 verharrt. Sobald die Kniehebeltotpunkt der Parallelführungen 6 sowie des / der Umlenkhebels 13 überlaufen werden (Fig. 3b), betätigt die Druckfeder 12 über den jeweiligen Umlenkhebel 13 den Lukendeckel 1 und bewegt ihn entlang dem Weg F2 gestützt durch den Anschlag 15 nach oben, bis ein maximaler Hub erreicht ist. Im weiteren verfährt der angehobene Lukendeckel 1 zusammen mit dem Führungsschlitten 5 bis zur voll geöffneten Position (Fig. 3c).

Das Schließen erfolgt in umgekehrter Reihenfolge.

## Patentansprüche

1. Vorrichtung zum Öffnen und / oder Schließen eines Lukendeckels (1), mit folgenden Merkmalen:
- eine Führung (4) mit einem Führungsschlitten (5), welcher den Lukendeckel (1) über Parallelführungen (6) trägt,
- Druckfedern (12) und Umlenkhebel (13), wobei
- einerseits der Führungsschlitten (5) über die Druckfedern (12) mit den Umlenkhebeln (13) und andererseits die Umlenkhebel (13) mit dem Lukendeckel (1) verbunden sind,
- einen Antrieb (9), der an eine mit dem Führungsschlitten (5) funktional verbundene Zahnstange (8) angreift, wobei
- beim Öffnen zunächst nur der Führungsschlitten (5) entlang eines Weges (F1) bewegt wird, während der Lukendeckel (1) verharrt,
- den Lukendeckel (1) durch die Druckfeder (12) über den jeweiligen Umlenkhebel (13) betätigt und entlang eines Hubweges (F2) und gestützt durch einen Anschlag (15) nach oben bewegt wird, bis ein maximaler Hub erreicht ist und
- der angehobene Lukendeckel (1) zusammen mit dem Führungsschlitten (5) bis zur voll geöffneten Position verfahren wird.

2. Vorrichtung nach Anspruch 1, **dadurch gekennzeichnet, dass** der Lukendeckel (1) in der geschlossenen Stellung durch die Parallelführungen (6) niedergehalten und in dieser Stellung arretiert wird.

3. Vorrichtung nach Anspruch 1 oder 2, **dadurch gekennzeichnet, dass** vier Parallelführungen (6) eingebunden sind.

4. Vorrichtung nach einem der Ansprüche 1 bis 3, **dadurch gekennzeichnet, dass** der Antrieb (9) mechanisch ist und über eine Kurbel (11) angesprochen wird.

5. Vorrichtung nach einem der Ansprüche 1 bis 3, **dadurch gekennzeichnet, dass** der Antrieb (9) ein Motor ist und elektrisch erfolgt.

6. Vorrichtung nach einem der Ansprüche 1 bis 5, **dadurch gekennzeichnet, dass** Führungsrollen (7) am Führungsschlitten (4) eingebunden sind.

7. Vorrichtung nach einem der Ansprüche 1 bis 6, **dadurch gekennzeichnet, dass** zumindest ein Anschlag (15) vorgesehen ist.

## Claims

1. Device for opening and/or closing a hatch cover (1), having the following features:
- a guide (4) with a guide carriage (5) which supports the hatch cover (1) by means of parallel guides (6),
- pressure springs (12) and deflecting levers (13),
- with the guide carriage (5) firstly being connected via the pressure springs (12) to the deflecting levers (13) and with the deflecting levers (13) secondly being connected to the hatch cover (1),
- a drive (9) which engages on a toothed rack (8) which is functionally connected to the guide carriage (5), wherein
- during opening, initially only the guide carriage (5) is moved along a path (F1) while the hatch cover (1) remains stationary,
- the hatch cover (1) is actuated by means of the pressure springs (12) via the respective deflecting lever (13) and is moved upward, along a lift path (F2) and supported by a stop (15), until a maximum lift is reached and
- the raised hatch cover (1) is moved together with the guide carriage (5) into the fully open position.

2. Device according to Claim 1, **characterized in that**, in the closed position, the hatch cover (1) is held down and is locked in this position by the parallel guides (6).

3. Device according to Claim 1 or 2, **characterized in that** four parallel guides (6) are incorporated.

4. Device according to one of Claims 1 to 3, **characterized in that** the drive (9) is mechanical and is activated by means of a crank (11).

5. Device according to one of Claims 1 to 3, **characterized in that** the drive (9) is a motor and takes place electrically.

6. Device according to one of Claims 1 to 5, **characterized in that** guide rollers (7) are incorporated on the guide carriage (5).

7. Device according to one of Claims 1 to 6, **characterized in that** at least one stop (15) is provided.

## Revendications

1. Dispositif pour ouvrir et/ou fermer un couvercle d'écoutille (1) présentant les caractéristiques suivantes :
- un guide (4) avec un chariot de guidage (5) qui supporte le couvercle d'écoutille (1) par le biais de guides parallèles (6),
- des ressorts de compression (12) et des leviers de renvoi (13),
- d'un côté les chariots de guidage (5) étant reliés avec les leviers de renvoi (13) par le biais des ressorts de compression (12) et de l'autre côté les leviers de renvoi (13) étant reliés avec le couvercle d'écoutille (1),
- un mécanisme d'entraînement (9) qui vient en prise avec une crémaillère (8) en relation fonctionnelle avec le chariot de guidage (5),
- lors de l'ouverture, seul le chariot de guidage (5) étant initialement déplacé le long d'une trajectoire (F1), alors que le couvercle d'écoutille (1) est à l'arrêt,
- le couvercle d'écoutille (1) étant actionné par le ressort de compression (12) par le biais du levier de renvoi (13) correspondant et étant déplacé vers le haut le long d'une trajectoire de levage (F2) en étant soutenu par une butée (15) jusqu'à atteindre une excursion maximale et
- le couvercle d'écoutille (1) soulevé étant amené conjointement avec le chariot de guidage (5) en position complètement ouverte.

2. Dispositif selon la revendication 1, **caractérisé en ce que** le couvercle d'écoutille (1) en position fermée est maintenu rabaissé et bloqué dans cette position par les guides parallèles (6).

3. Dispositif selon la revendication 1 ou 2, **caractérisé en ce que** quatre guides parallèles (6) sont intégrés.

4. Dispositif selon l'une des revendications 1 à 3, **caractérisé en ce que** le mécanisme d'entraînement (9) est mécanique et il est sollicité par le biais d'une manivelle (11).

5. Dispositif selon l'une des revendications 1 à 3, **caractérisé en ce que** le mécanisme d'entraînement (9) est un moteur et que l'entraînement est électrique.

6. Dispositif selon l'une des revendications 1 à 5, **caractérisé en ce que** des galets de guidage (7) sont intégrés au chariot de guidage (5).

7. Dispositif selon l'une des revendications 1 à 6, **caractérisé en ce qu'**il est prévu au moins une butée (15).
